# EUROPÄISCHE PATENTSCHRIFT

(11) **EP 2 106 964 B1**
(45) Veröffentlichungstag und Bekanntmachung des Hinweises auf die Patenterteilung: **10.11.2010**
(21) Anmeldenummer: 09004653.3
(22) Anmeldetag: 31.03.2009
(51) Int. Cl.: B60N 2/56

(54) **Sitzpolsterung für Fahrzeuge**
Seat upholstery for vehicles
Rembourrage de siège pour véhicules

(30) Priorität: 03.04.2008 DE 202008004690 U
(43) Veröffentlichungstag der Anmeldung: 07.10.2009
(73) Patentinhaber: I.G. Bauerhin GmbH, 63584 Gründau (DE)
(72) Erfinder: Geis, Daniel, 63776 Mömbris (DE); Sauer, Michael, 63607 Wächtersbach (DE)
(74) Vertreter: Grimm, Ekkehard

(56) Entgegenhaltungen:
- WO-A-02/06083
- WO-A-2004/040943
- DE-A1-102006 017 732

## Beschreibung

Die vorliegende Erfindung betrifft eine Sitzpolsterung für Fahrzeugsitze mit einem tragenden Schaumkörper sowie einem Sitzbezug mit mindestens einer zwischen dem Schaumkörper und dem Sitzbezug eingebrachten Zwischenlage, mit in die Zwischenlage integrierten Heizleitern zur Sitzbeheizung und mit mindestens einem als Antenne für eine Sitzbelegungserkennung dienenden isolierten Leiter.

Fahrzeugsitze werden zunehmend komplexer und mit einer Vielzahl von technischen Merkmalen ausgestattet, wie beispielsweise mit Sitzheizung, Belüftungssystemen, einer Sitzbelegungserkennung, neben den verschiedenen Verstellmöglichkeiten, um den Sitz optimal einer Person anpassen zu können.

Für die Sitzbelegungserkennung werden unter anderem Antennen in Form von isolierten Leitern in die Fahrzeugsitze eingebracht. Diese Leiter werden wie Heizleiter für Sitzheizungen in ein textiles Flächengebilde eingearbeitet.

Ein elektrisch leitfähiges, textiles Flächengebilde mit Heizleitern und Antenne ist aus der DE 10 2006 017 732 A1 bekannt. Der in diesem Dokument beschriebene Fahrzeugsitz weist einen Schaumstoffkörper als Unterlage, ein darauf aufgelegtes textiles Flächengebilde sowie ein Obermaterial, das das Flächengebilde abdeckt, auf. Die elektrisch leitfähigen Filamente des textilen Flächengebildes sind als Heizleiter einer Sitzheizung geeignet. Darüber hinaus können elektrisch leitfähige Filamente als Antennen vorgesehen werden, wobei dann das textile Flächengebilde als Kindersitzerkennung verwendet wird.

Da Antennen-Leiter ähnlich wie Heizleiter für Sitzheizungen verlegt werden, ist es üblich, diese zusammen mit der Sitzheizung in einer Zwischenlage zu fixieren und diese dann in den Bezug einzunähen. Dadurch können Kosten für einen separaten Träger für den Antennen-Leiter eingespart werden und die Montage kann vereinfacht werden. Diese Zwischenlage ist somit zwischen der Bezugsoberfläche und dem Schaumkern angeordnet, wie dies auch in der DE 10 2006 017 732 A1 beschrieben ist.

Die Zwischenlage wird in der Regel aus einem Vlies-, einem Schaum- oder einem watteähnlichen Material gebildet und unter anderem auch mehrschichtig aufgebaut. Dadurch wird nicht nur eine Heizung und Sitzbelegungseinrichtung in den Sitz integriert, sondern auch eine komfortable Oberfläche bezüglich Weichheit und Design erzielt.

Speziell am Außenrand im Nahtbereich der Sitzfläche ist diese Zwischenlage ein besonders wichtiges Bauteil für die Polsterung, um haptische und optische Strukturen zu erzeugen, indem diese zusammen mit dem Leder oder dem Stoffbezug vernäht wird.

Nachteilig an diesem System sind viele Übernähungen und Vernähungen des Bezuges, wobei in der Regel auch Heizleiter übernäht werden müssen.

Konventionelle Heizleiter, wie Carbonleiter sowie Stahlheizleiter oder auch Kupferleiter, sind übernähbar, wobei die Isolation aber in der Regel beschädigt wird, was aber bei Heizleitern in gewissem Umfang toleriert werden kann.

Da sich bei bestimmten Systemen zur Sitzbelegungserkennung keine Beschädigungen der Isolation der Antennen-Leiter ergeben darf, ist eine Übernähung der Zwischenlage im Bezug nicht möglich, da die Nadel der Nähmaschine beim Nähprozess zwangsläufig den Leiter der Antenne durchstechen kann.

Der vorliegenden Erfindung liegt nun die Aufgabe zugrunde, eine Sitzpolsterung für Fahrzeuge mit integrierten Heizleitern sowie mit mindestens einer Antenne für eine Sitzbelegungserkennung zu schaffen, die die vorstehend aufgeführten Nachteile des Stands der Technik beseitigt.

Die vorstehende Aufgabe wird gelöst durch eine Sitzpolsterung für Fahrzeugsitze mit einem tragenden Schaumkörper sowie einem Sitzbezug, mit mindestens einer zwischen dem Schaumkörper und dem Sitzbezug eingebrachten Zwischenlage, mit in die Zwischenlage integrierten Heizleitern zur Sitzbeheizung und mindestens einem als Antenne für eine Sitzbelegungserkennung dienenden isolierten Leiter, die dadurch gekennzeichnet ist, dass die Zwischenlage in mindestens zwei Segmente geteilt ist, wobei in das eine Segment der Zwischenlage der als Antenne dienende isolierte Leiter integriert ist und dieses Segment auf dem Schaumkörper aufgeklebt oder angeheftet ist und wobei mindestens ein zweites Segment der Zwischenlage Heizleiter enthält und in den Bezug eingenäht ist.

Erfindungsgemäß wird, um die Komforteigenschaften im Wangenbereich zu erhalten und dabei den Antennen-Leiter vor Übernähung zu schützen, eine Zwischenlage aufgeteilt, wobei ein Segment die Antenne beinhaltet und mindestens ein zweites Segment Heizleiter enthält. Das die Antenne(n) enthaltende Segment ist auf den Schaumkörper aufgelegt, während das zweite Segment, das die Heizleiter enthält, in den Bezug integriert ist.

Durch diese Maßnahmen wird erreicht, dass die Zwischenlage, aufgrund ihrer Aufteilung, für die Polsterung der Wangen oder des gesamten Außenbereichs des Sitzes, in den Bezug integriert, eingesetzt werden kann und zumindest der Sitzwangenbereich in den Bezug eingenäht werden kann. Der den Antennen-Leiter tragende Zentralbereich (Spiegelbereich) wird auf den Schaumkörper aufgebracht und vorzugsweise verklebt.

In einer Ausgestaltung der Sitzpolsterung enthalten beide Segmente der Zwischenlage Heizleiter. Dadurch kann sowohl das das Antenne tragende Segment als auch das in den Bezug eingenähte Segment mittels Heizleiter beheizt werden.

Es kann von Vorteil sein, an das Segment der Zwischenlage, in das die Antenne integriert ist, einen Kabelsatz anzubringen, an den das in den Bezug integrierte Segment angesteckt werden kann. Bei der Montage des Sitzes werden dann über eine entsprechende Steckverbindung die elektrischen Verbindungen der im Bezug integrierten Heizleiter mit dem Hauptkabelsatz der Sitzheizung vorgenommen, der auch die Heizleiter des die Antennen tragenden Segments mit elektrischem Strom versorgen kann.

Die Zwischenlage mit der Antenne kann eine Aussparung aufweisen, in der ein Steuergerät aufgenommen werden kann, das auf diese Weise über kurze Wege an die Antenne angeschlossen werden kann und als Sende- und/oder Empfangseinheit sowie als Datenauswertungseinheit dient. Durch Abdeckungen kann dieses Steuergerät fest mit dem Segment der Zwischenlage verbunden werden.

Die Antennen-Leiter bestehen bevorzugt aus isolierten Stahl- oder Kupferleitern, wobei aber auch Hybrid- und Kern-Manteldrähte zum Einsatz kommen können. Antennensysteme aus metallisierten Kunststofffasern, wie vernickeltes oder versilbertes Polyamid oder PBO-Fasern, sind auch geeignet.

Als Isolierung für die Antennen-Leiter sind grundsätzliche Isolierungen, die in der Elektrotechnik Anwendung finden, geeignet.

Vorzugsweise werden solche Isolierungen aus MFA, PTFE, Polyurethan sowie Lacke, wie beispielsweise Polyurethanlacke, gebildet; mit diesen Materialien werden besonders gute Ergebnisse bezüglich Langlebigkeit und Korrosionsbeständigkeit erzielt. Einzeln lackisolierte Filamente, die in einer Litze zusammengefasst sind, sind ebenfalls einsetzbar.

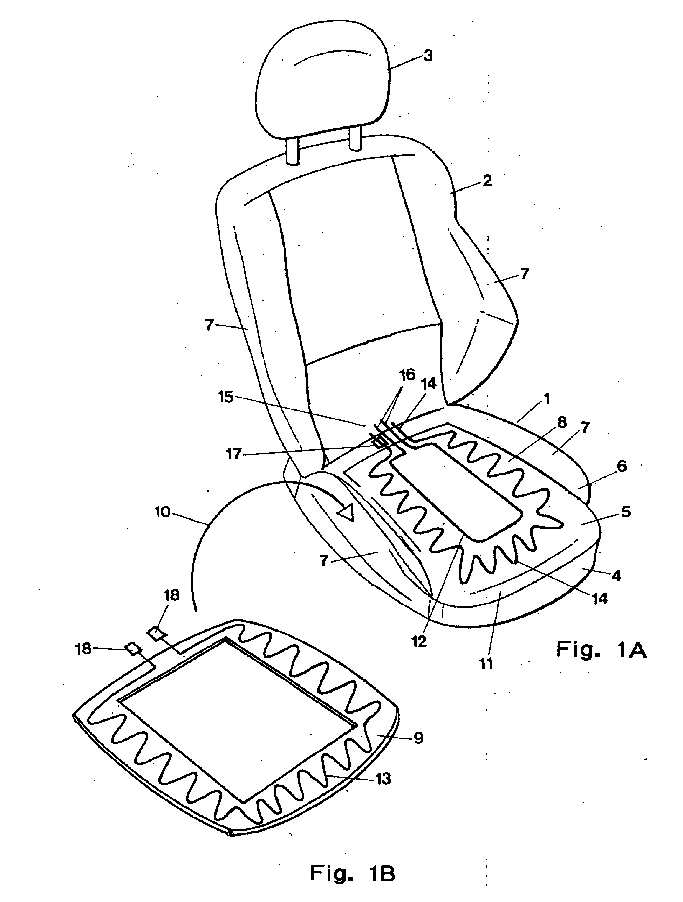

Weitere Einzelheiten und Merkmale der Erfindung ergeben sich aus der nachfolgenden Beschreibung eines Ausführungsbeispiels anhand der Zeichnung. In der Zeichnung zeigt
Figur 1A eine schematische Darstellung eines Fahrzeugsitzes mit darin integrierter Sitzheizung und Antennen-Leiter im Bereich der Sitzfläche, wobei die Sitzfläche ohne Bezug dargestellt ist, und
Figur 1B das Segment einer Zwischenlage, die in den Bezug eingenäht ist, der den Sitzwangen zugeordnet ist.

Der Fahrzeugsitz, wie in die Figur 1A zeigt, umfasst ein Sitzpolster, das allgemein mit dem Bezugszeichen 1 bezeichnet ist, sowie eine Rückenlehne 2 mit einer Kopfstütze 3 am oberen Ende.

Das Sitzpolster 1 besteht im Wesentlichen aus einem Schaumkörper 4, einem darauf aufgelegten ersten Segment 5 einer Zwischenlage und einem Sitzbezug 6, der allerdings in Figur 1A im Bereich der Sitzfläche abgenommen ist, um die Sicht auf das erste Segment 5 der Zwischenlage freizugeben. Für eine seitliche Führung einer auf dem Sitz sitzenden Person weisen sowohl das Sitzpolster 1 als auch die Rückenlehne 2 im Außenbereich seitliche Wangen 7 auf.

üblicherweise ist zwischen Sitzpolster 1 und Sitzbezug 6 sowohl im Sitzbereich als auch im gesamten Außenbereich des Sitzes eine Zwischenlage eingearbeitet, die aus einem Vlies, Schaum oder watteähnlichen Material gebildet ist und unmittelbar unterhalb des Sitzbezugs 6 der zusätzlichen Polsterung dient.

In dem gezeigten Beispiel ist diese Zwischenlage in das erste Segment 5, das in Figur 1A zu sehen ist und der Sitzfläche 8 des Sitzes zugeordnet ist, und ein zweites Segment 9, das in Figur 1 B gezeigt ist, unterteilt. Dieses zweites Segment 9 der Zwischenlage ist in der Draufsicht rahmenförmig so ausgebildet, dass es dann, wenn es bei der Fertigung des Fahrzeugsitzes oberhalb des Schaumkörpers 4 auf das Sitzpolster 1 aufgelegt wird, wie dies durch den Pfeil 10 angedeutet ist, nur den Bereich der seitlichen Wangen 7 sowie des vorderen Segments 11 belegt; gegebenenfalls auch den äußeren Bereich der Sitzfläche 8.

In dem ersten Segment 5 in der Zwischenlage, das der Sitzfläche 8 zugeordnet ist, ist ein Antennen-Leiter 12 integriert, der beispielsweise als Antenne für eine Sitzbelegungserkennung dient. Dieses erste Segment 5 der Zwischenlage ist beispielsweise auf den Schaumkörper 4 aufgeklebt oder daran angeheftet.

Das zweite Segment 9 (siehe Figur 1 B) ist mit einem Heizleiter 13 ausgestattet und wird, vor Montage an dem Sitzpolster 1, in den Sitzbezug eingenäht. Wie anhand einer Zuordnung des zweiten Segment 9 der Figur 1B zu dem Sitzpolsters 1 des Sitzes in Figur 1A zu erkennen ist, ist dieses zweite Zwischenteil 9 und damit auch die Sitzheizung 13 dieses Segments 9 nur den seitlichen Wangen 7 und dem äußeren Rand der Sitzfläche 9 zugeordnet.

Falls erforderlich, kann auch das erste Segment 5 der Zwischenlage mit einem weiteren Heizleiter 14 versehen sein, der in dem gezeigten Ausführungsbeispiel den Antennen-Leiter 12 umgibt.

Der Antennen-Leiter 12 ist in Form einer Schleife in den mittleren Bereich der Sitzfläche 8 gelegt. Am hinteren Ende der Sitzfläche 8 läuft ein Kabelsatz 15 zusammen, der zwei Anschlüsse 16 für den Antennen-Leiter 12 sowie zwei Anschlüsse 17 für den Heizleiter 14 umfasst. Auch das zweite Segment 9 der Zwischenlage ist im hinteren Bereich mit Verbindern 18 versehen, so dass der Heizleiter 13 elektrisch verbunden werden kann, beispielsweise auch in Reihe mit dem Heizleiter 14, der in dem ersten Segment 5 der Zwischenlage integriert ist.

## Patentansprüche

1. Sitzpolsterung (1) für Fahrzeugsitze mit einem tragenden Schaumkörper (4) sowie einem Sitzbezug (6), mit mindestens einer zwischen dem SChaumkörper (4) und dem Sitzbezug (6) eingebrachten Zwischenlage, mit in die Zwischenlage integrierten Heizleitern (13,14) zur Sitzbeheizung und mindestens einem als Antenne für eine Sitzbelegungserkennung dienenden isolierten Leiter (12), **dadurch gekennzeichnet, dass** die Zwischenlage in mindestens zwei Segmente (5, 9) geteilt ist, wobei in das eine Segment (5) der Zwischenlage der als Antenne dienende isolierte Leiter (12) integriert ist und dieses Segment auf dem Schaumkörper (4) aufgeklebt oder angeheftet ist und wobei mindestens ein zweites Segment (9) der Zwischenlage Heizleiter (13) enthält und in den Bezug (6) eingenäht ist.

2. Sitzpolsterung nach Anspruch 1, **dadurch gekennzeichnet, dass** beide Segmente (5, 9) der Zwischenlage Heizleiter (14, 13) enthalten.

3. Sitzpolsterung Anspruch 1 oder 2, **dadurch gekennzeichnet, dass** an das Segment (5) der Zwischenlage, in das die Antenne integriert ist, ein Kabelsatz (15) angebracht ist, an welchen das in den Bezug integrierte Segment (9) angesteckt werden kann.

4. Sitzpolsterung nach einem der Ansprüche 1 bis 3, **dadurch gekennzeichnet, dass** ein Steuergerät zur Auswertung der Antennensignale in die auf dem Schaumkörper aufgebrachte Zwischenlage integriert ist.

5. Sitzpolsterung nach einem der Ansprüche 1 bis 4, **dadurch gekennzeichnet, dass** der Antennen-Leiter (12) aus isolierten Stahlfilamenten und/oder isolierten Kernmanteldrähten und/oder aus metallisierten Kunststofffasern besteht.

6. Sitzpolsterung nach einem der Ansprüche 1 bis 5, **dadurch gekennzeichnet, dass** die Isolation des als Antenne dienenden isolierten Leiters (12) aus MFA, PTFE oder Polyurethanlack besteht.

7. Sitzpolsterung nach Anspruch 5, **dadurch gekennzeichnet, dass** die Isolation der einzelnen Stahlfilamente aus MFA, PTFE oder Polyurethanlack besteht.

## Claims

1. A seat padding (1) for vehicle seats comprising a supporting foam body (4) and a seat cover (6), at least one intermediate layer inserted between the foam body (4) and the seat cover (6), heating conductors (13, 14) integrated into the intermediate layer for heating the seat, and at least one insulated conductor (12) serving as an antenna for seat occupancy detection, **characterized in that** the intermediate layer is divided into at least two segments (5, 9), wherein the insulated conductor (12) serving as an antenna is integrated into the one segment (5) of the intermediate layer and said segment is adhesively adhered or is attached to the foam body (6), and wherein at least one second segment (9) of the intermediate layer contains heating conductors (13) and is sewn into the cover (6).

2. The seat padding according to claim 1, **characterized in that** both segments (5, 9) of the intermediate layer contain heating conductors (14, 13).

3. The seat padding according to claim 1 or 2, **characterized in that** the segment (5) of the intermediate layer into which the antenna is integrated has mounted thereon a set of cables (15) to which the segment (9) integrated into the cover can be affixed.

4. The seat padding according to any one of claims 1 to 3, **characterized in that** a control device for evaluating the antenna signals is integrated into the intermediate layer applied to the foam body.

5. The seat padding according to any one of claims 1 to 4, **characterized in that** the antenna conductor (12) consists of insulated steel filaments and/or insulated core sheath wires and/or of metallized plastic fibers.

6. The seat padding according to any one of claims 1 to 5, **characterized in that** the insulation of the insulated conductor (12) serving as an antenna consists of MFA, PTFE or polyurethane lacquer.

7. The seat padding according to claim 5, **characterized in that** the insulation of the individual steel filaments consists of MFA, PTFE or polyurethane lacquer.

## Revendications

1. Rembourrage de siège (1) pour véhicule avec un corps en mousse support (4) ainsi qu'un revêtement de siège (6) avec au moins une couche intermédiaire entre le corps de mousse (4) et le revêtement de siège (6), avec des conducteurs de chaleur (13, 14) intégrés dans la couche intermédiaire pour le chauffage du siège et au moins un conducteur (12) isolé servant d'antenne pour la détection d'occupation de siège, **caractérisé en ce que** la couche intermédiaire est divisée en au moins deux segments (5, 9), le conducteur (12) isolé servant d'antenne étant intégré dans un segment (5) de la couche intermédiaire et ce segment étant collé ou agrafé sur le corps de mousse (4), et au moins un second segment (9) de la couche intermédiaire contient des conducteurs de chaleur (13) et est cousu dans le revêtement (6).

2. Rembourrage de siège selon la revendication 1, **caractérisé en ce que** les deux segments (5, 9) de la couche intermédiaire contiennent des conducteurs de chaleur (14, 13).

3. Rembourrage de siège selon la revendication 1 ou 2, **caractérisé en ce que** sur le segment (5) de la couche intermédiaire dans lequel est intégrée l'antenne, il est prévu un jeu de câbles (15) sur lequel peut être branché le segment (9) intégré dans le revêtement.

4. Rembourrage de siège selon l'une des revendications 1 à 3, **caractérisé en ce qu'**un appareil de commande pour l'analyse des signaux d"antenne est intégré dans la couche intermédiaire appliquée sur le corps de mousse.

5. Rembourrage de siège selon l'une des revendications 1 à 4, **caractérisé en ce que** le conducteur d'antenne (12) se compose de filaments d'acier isolés et/ou de fils métalliques isolés avec une enveloppe et un coeur et/ou de fibres métallisés en matière synthétique.

6. Rembourrage de siège selon l'une des revendications 1 à 5, **caractérisé en ce que** l'isolation du conducteur (12) servant d'antenne se compose de MFA, PTFE ou laque polyuréthane.

7. Rembourrage de siège selon la revendication 5, **caractérisé en ce que** l'isolation de chacun des filaments d'acier se compose de MFA, PTFE ou laque polyuréthane.
